# EUROPÄISCHE PATENTSCHRIFT

(11) **EP 1 551 588 B1**
(45) Veröffentlichungstag und Bekanntmachung des Hinweises auf die Patenterteilung: **27.02.2013**
(21) Anmeldenummer: 03798870.6
(22) Anmeldetag: 26.09.2003
(51) Int. Cl.: B23K 3/08, B23K 1/012

(54) **REINIGUNGSVORRICHTUNG ZUR REINIGUNG VON PROZESSGAS EINER REFLOWLÖTANLAGE**
CLEANING GAS DEVICE CLEANING THE PROCESS GAS OF A REFLOW SOLDERING SYSTEM
DISPOSITIF DE NETTOYAGE ET PROCEDE POUR NETTOYER LE GAZ DE PROCESS D'UNE INSTALLATION DE BRASAGE PAR FUSION

(30) Priorität: 30.09.2002 DE 10246540
(43) Veröffentlichungstag der Anmeldung: 13.07.2005
(73) Patentinhaber: Rehm Thermal Systems GmbH, 89143 Blaubeuren-Seissen (DE)
(72) Erfinder: MEIER, Hartmut, 16321 Bernau (DE); MÜLLER, Bernd, 16259 Falkenberg (DE); WITTREICH, Ulrich, 16727 Velten (DE)
(74) Vertreter: Grünecker, Kinkeldey, Stockmair & Schwanhäusser
(86) Internationale Anmeldenummer: PCT/DE2003/003311
(87) Internationale Veröffentlichungsnummer: WO 2004/030855

(56) Entgegenhaltungen:
- EP-A- 0 898 443
- US-A- 5 524 812
- US-A- 5 641 341

## Beschreibung

Die Erfindung bezieht sich auf eine Reinigungsvorrichtung für Prozessgase insbesondere einer Reflowlötanlage mit einer Vielzahl von eine Reinigungsflüssigkeit für das Prozessgas enthaltenden Reinigungsräumen, die alle über eine Zuleitung für das verunreinigte Prozessgas und eine Ableitung für das gereinigte Prozessgas durchströmbar sind, (seihe z.B. US-A-5641341).

Reinigungsvorrichtungen für Reflowlötgase sind beispielsweise aus dem US-Patent mit der Nummer 4,951,401 bekannt. Diese Reinigungsvorrichtungen weisen einen Kanal auf, mit dessen Hilfe das Prozessgas der Reflowlötanlage entnommen wird und nach Reinigung mittels eines Filters der Anlage wieder zugeführt wird. Durch den Filter werden Verunreinigungen aus dem Prozessgas zurückgehalten, wobei der Filter ausgewechselt oder ausgewaschen werden kann, sobald seine Aufnahmekapazität erschöpft ist. Eine weitere Reinigungsvorrichtung für Prozessgase einer Reflowlötanlage ist in der JP 59-029020 A beschrieben. Bei dieser wird das Prozessgas durch eine Reinigungsflüssigkeit geleitet.

Eine Reinigungsvorrichtung für Abgase aus Verbrennungsprozessen ist in der DE 37 27 294 A1 beschrieben. Diese weist ein rohrförmiges Gehäuse auf, welches durch tellerartige, so genannte Gasverteilerböden in mehrere Abscheideräume für das Prozessgas aufgeteilt werden kann. Die Anzahl der verwendeten Gasverteilerböden ist in ihrer Zahl durch die Länge des rohförmigen Gehäuses bedingt.

Die Aufgabe der Erfindung liegt darin, eine Reinigungsvorrichtung für Prozessgase insbesondere von Reflowlötanlagen bereitzustellen, um diese Reflowlötanlagen mit unterschiedlicher Kapazität anzupassen und eine vergleichsweise effiziente Reinigung des Prozessgases unabhängig von den durch die Anlage vorgegebenen Rahmenbedingungen möglich ist.

Diese Aufgabe wird erfindungsgemäß eine Reinigungsvorrichting gemäß Anspruch 1 durch gelöst. Die Reinigungsräume sind jeweils durch Module gebildet, von denen jeweils derart viele parallel durchströmbar angeordnet sind, dass die geforderte Durchsatzmenge an Prozessgas erreicht wird und von denen jeweils derart viele nacheinander durchströmbar angeordnet sind, dass der geforderte Reinheitsgrad für das Prozessgas erreicht wird. Durch den Kontakt des Prozessgases mit der Reinigungsflüssigkeit können die Verunreinigungen aus dem Prozessgas an die Reinigungsflüssigkeit abgegeben werden. Dabei kann vorteilhafterweise die Reinigungsvorrichtung optimal an die geforderte Abscheideleistung angepasst werden, indem die Module je nach geforderter Durchsatzmenge an Prozessgas parallel und nach gefordertem Restgehalt an Verunreinigungen in Reihe geschaltet werden. Dabei können insbesondere auch Module unterschiedlicher Wirkprinzipien in Reihe geschaltet werden, um den geforderten Abscheidegrad zu erreichen und beispielsweise Verunreinigungen mit unterschiedlichen Eigenschaften optimal ausfiltern zu können. Die einzelnen, zur Anwendung kommenden Module können einfach im Aufbau und gering in ihrer Baugröße gestaltet werden, so dass beispielsweise mittels Steckverbindungen auf einfache Weise Reinigungsvorrichtungen mit einer fein gestuften Möglichkeit zur Kapazitätsanpassung geschaffen werden können.

Zumindest ein Teil der Reinigungsräume enthält mindestens eine Abscheidewand, auf deren Oberfläche sich ein Film der Reinigungsflüssigkeit befindet. Hierdurch kann vorteilhaft eine genau definierte Abscheidefläche gebildet werden, die durch die Fläche des auf der Abscheidewand gebildeten Films an Reinigungsflüsigkeit gegeben ist.

Ein weiterer Vorteil liegt darin, dass eine Steigerung der Abscheideleistung nicht durch einen Anstieg des durch die Reinigungsvorrichtung erzeugten Druckverlustes begrenzt ist. Ein zusätzlicher Vorteil bei der Verwendung von Reinigungsflüssigkeit ist dadurch gegeben, dass diese ausgewechselt werden kann, ohne den Prozessablauf der Reflowlötanlage zum Stillstand zu bringen. Dabei kann die entnommen, verunreinigte Reinigungsflüssigkeit zeitgleich durch saubere Reinigungsflüssigkeit ersetzt werden. Durch die Vermeidung von Stillstandzeiten der Reflowlötanlage ist vorteilhaft eine Steigerung der Wirtschaftlichkeit des Betriebs einer mit der erfindungsgemäßen Reinigungsvorrichtung versehenen Reflowlötanlage möglich.

Es ist vorteilhaft, wenn Module mit verschiedenen Wirkprinzipien in der Abscheidung hintereinander in Reihe geschaltet sind. Es kann dabei beispielsweise zunächst ein Wirkprinzip mit einem hohen Aufnahmevermögen für Verunreinigungen verwendet werden, wodurch sich das Prozessgas zunächst in kurzer Zeit von einem Großteil der Verunreinigungen befreien lässt. Danach kann beispielsweise ein Wirkprinzip mit einer hohen Leistung hinsichtlich der erreichbaren Restkonzentration verwendet werden, so dass sich ein hoher Reinheitsgrad des gereinigten Prozessgases einstellen lässt.

Eine Ausgestaltung der Erfindung sieht vor, dass ein Durchströmungsweg für die Reinigungsflüssigkeit derart durch die in Reihe geschalteten Module verläuft, dass die Strömungsrichtung der Reinigungsflüssigkeit der Strömungsrichtung des Prozessgases entgegengerichtet ist. Hierdurch lässt sich vorteilhafterweise durch Verwirklichung eines Gegenstromprinzips die Abscheideleistung der erfindungsgemäßen Reinigungsvorrichtung verbessern.

Gemäß einer weiteren Ausgestaltung der modulartigen Bauweise ist vorgesehen, dass in den Reinigungsräumen der parallel geschalteten Module Reinigungsflüssigkeiten mit unterschiedlichen Reinigungseigenschaften vorgesehen sind. Hierdurch können unterschiedliche Reinigungsflüssigkeiten ausgewählt werden, die vorteilhaft jeweils optimal an unterschiedliche, jeweils auszuscheidende Stoffe angepasst sein können. Mit diesen Reinigungsflüssigkeiten lassen sich dann jeweils optimale Reinigungsergebnisse erzielen. Bei Einsatz unterschiedlicher Reinigungsflüssigkeiten ist es besonders vorteilhaft, die Module bezüglich des zu reinigenden Prozessgases in Reihe zu schalten, weil das Prozessgas dann in einem Durchlauf alle unterschiedlichen Reinigungsflüssigkeiten passiert.

Gemäß einer weiterführenden Ausgestaltung der Erfindung ist vorgesehen, dass der Reinigungsraum ein aus der Reinigungsflüssigkeit bestehendes Bad enthält, wobei die Zuleitung unterhalb des Flüssigkeitsspiegels des Bades in dieses mündet. Hierdurch ist es vorteilhaft möglich, das Prozessgas in Form von Blasen durch das Bad zu leiten, wodurch die Oberfläche, die zur Abgabe der Verunreinigungen aus dem Prozessgas an die Reinigungsflüssigkeit zur Verfügung steht, erhöht wird. Gleichzeitig ist der Aufbau dieser Reinigungseinrichtung sehr einfach, so dass vorteilhaft eine kostengünstige Herstellung möglich ist.

Es ist vorteilhaft, wenn die Abscheidewand lotrecht oder mit Gefälle im Reinigungsraum angeordnet ist und im Bereich eines sich aufgrund dieser Anordnung ergebenen, oben liegenden Randes der Abscheidewand einer auf diese gerichtete Zuführung für die Reinigungsflüssigkeit angeordnet ist. Hierdurch wird erreicht, dass die Reinigungsflüssigkeit einem Wasserfall gleichend und der Schwerkraft folgend, ausgehend vom oben liegenden Rand der Abscheidewand an dieser herunterfließt und so der Austausch der Reinigungsflüssigkeit unproblematisch erfolgen kann.

Eine wiederum andere Ausgestaltung der Erfindung sieht vor, dass in den Reinigungsraum mindestens eine Einspritzöffnung für die Reinigungsflüssigkeit gerichtet ist. Mittels vorzugsweise mehrerer Einspritzöffnungen kann die Reinigungsflüssigkeit im Reinigungsraum verteilt werden, wobei sich ein Gemisch mit dem zu reinigenden Prozessgas bildet. Hierdurch wird vorteilhafterweise die Oberfläche, die zur Aufnahme von Verunreinigungen in die Reinigungsflüssigkeit zur Verfügung steht, vergrößert. Es kann beispielsweise ein Flüssigkeitsvorhang gebildet werden, durch den das Prozessgas geleitet wird. Die Einspritzöffnungen können aber auch düsenförmig ausgebildet sein, so dass in dem Reinigungsraum ein Flüssigkeitsnebel erzeugt werden kann.

Eine weiterführende Ausbildung der Erfindung ist durch einen Zusammenschluss von mehreren jeweils einen Reinigungsraum enthaltenden Modulen derart, dass alle Reinigungsräume durch ein Prozessgas durchströmbar sind, gekennzeichnet. Hierbei kann der Zusammenschluss zum einen als Parallelschaltung mehrerer Module erzeugt werden, wodurch vorteilhaft eine einfache Anpassung der Kapazität der Reinigungsvorrichtung an verschiedener Reflowlötanlagen möglich wird. Dabei entsteht nur ein geringer konstruktiver Aufwand und die Verringerung von Einzelkomponenten wirkt sich günstig auf die Lagerhaltung bei dem Vertrieb der Reinigungsvorrichtung aus. Weiters ist die Reihenschaltung von Modulen vorgesehen, wodurch die Reinigungsvorrichtung in Bezug auf die Qualität des Abscheideergebnisses modifiziert werden kann. Dabei können insbesondere Module mit verschiedenen Wirkprinzipien, beispielsweise den oben bereits beschriebenen, hintereinandergeschaltet werden, so dass die Vorteile der einzelnen Wirkprinzipien untereinander kombiniert werden können.

Vorteilhafterweise kann der Reinigungsraum einen Ablauf aufweisen, der mit einer Klärvorrichtung für die Reinigungsflüssigkeit verbunden ist. Die Klärvorrichtung kann beispielsweise aus einem Klärbecken bestehen, in dem sich die in die Reinigungsflüssigkeit eingebrachten Verunreinigungen als Klärschlamm absetzten. Dieser lässt sich dann einfach entsorgen, während die geklärte Reinigungsflüssigkeit dem Reinigungsprozess wieder zugeführt werden kann. Dadurch ergibt sich die Möglichkeit einer Mehrfachverwendung der Reinigungsflüssigkeit, wodurch die Wirtschaftlichkeit bei dem Betrieb der Reinigungsvorrichtung vorteilhaft weiter gesteigert werden kann.

Weitere Einzelheiten der Erfindung werden im Folgenden anhand der Zeichnung beschrieben. Hierbei zeigen
- Figur 1: eine Anschlussmöglichkeit für eine Reinigungsvorrichtung an eine Reflowlötanlage, im schematischen Schnitt, die
- Figuren 2 bis 4: mögliche Wirkprinzipien für Reinigungsvorrichtungen mit Reinigungsflüssigkeit im schematischen Schnitt und
- Figur 5: ein Ausführungsbeispiel der erfindungsgemäßen Reinigungsvorrichtung in modularer Anordnung schematisch und teilweise aufgeschnitten.

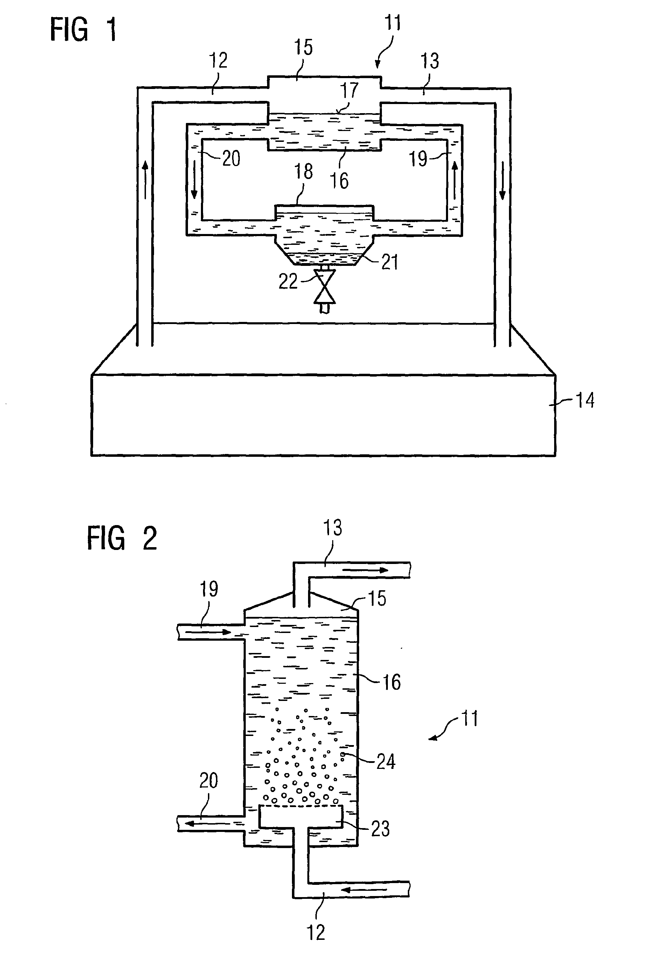

In Figur 1 ist als veranschaulichendes Beispiel eine Reinigungsvorrichtung 11 dargestellt, welche über eine Zuleitung 12 und eine Ableitung 13 mit einer Reflowlötanlage 14 derart verbunden ist, dass das in der Reflowlötanlage enthaltene Prozessgas entsprechend angedeuteten Pfeilen der Reinigungsvorrichtung zugeführt und nach erfolgter Reinigung wieder in die Reflowlötanlage 14 zurückgeführt werden kann, so dass ein Kreislauf für das Prozessgas entsteht. In der Reinigungsvorrichtung ist ein Reinigungsraum 15 enthalten, der teilweise mit einer Reinigungsflüssigkeit 16 gefüllt ist. An einer Grenzfläche 17 zwischen der Reinigungsflüssigkeit 16 und dem im Reinigungsraum 15 befindlichen Prozessgas findet ein Austausch von Verunreinigungen aus dem Prozessgas in die Reinigungsflüssigkeit statt.

Die Reinigungsflüssigkeit 16 bildet mit einer Klärvorrichtung 18 in Form eines Klärbeckens einen Kreislauf, der über einen Zulauf 19 zur Reinigungsvorrichtung und einen Ablauf 20 von der Reinigungsvorrichtung weg geschlossen wird. In der Klärvorrichtung 18 setzen sich die aus dem Prozessgas in die Reinigungsflüssigkeit 16 überführten Verunreinigungen als Klärschlamm 21 ab. Der Klärschlamm kann über ein Ablassventil 22 der Klärvorrichtung entnommen werden.

Als Reinigungsflüssigkeiten können beispielsweise inerte Flüssigkeiten wie Wasser oder Öle eingesetzt werden, die keine Reaktionen mit Bestandteilen des Prozessgases eingehen. Besonderes vorteilhaft ist der Einsatz von sogenannten Perflourpolyethern, welche weder in Wasser noch in Öl löslich sind und sich durch eine hohe Beständigkeit gegen reaktive Chemikalien auszeichnen.

Im Folgenden werden weitere Ausführungsbeispiele von Reinigungseinrichtungen erläutert, wobei Bauteile, die entsprechend dem Ausführungsbeispiel gemäß Figur 1 ausgebildet sind, mit gleichen Bezugszeichen versehen sind und nicht näher erläutert werden.

Die Reinigungsvorrichtung 11 gemäß Figur 2 ist zylindrisch ausgeführt und weitgehend mit der Reinigungsflüssigkeit 16 ausgefüllt. Über den Zulauf 19 und den Ablauf 20 wird die Reinigungsflüssigkeit kontinuierlich ausgetauscht.

Das Prozessgas wird über die Zuleitung 12 und einen Verteilteiler 23 unterhalb des Flüssigkeitsspiegels der Reinigungsflüssigkeit 16 zugeleitet, so dass das Prozessgas gereinigt werden kann, während es in kleinen Blasen 24 in der Reinigungsflüssigkeit aufsteigt.

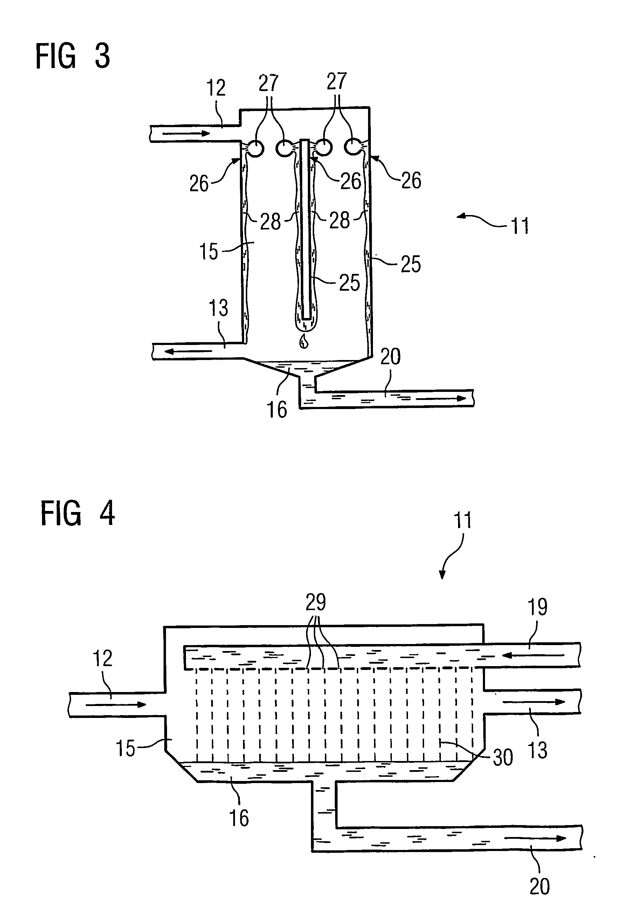

In dem Reinigungsraum 15 der Reinigungsvorrichtung 11 gemäß Figur 3 sind Abscheidewände 25 vorgesehen, die teilweise gleichzeitig durch die Außenwandung der Reinigungsvorrichtung 11 gebildet werden. An oberen Rändern 26 der Abscheidewände sind Zuführungen 27 vorgesehen, die mit dem in Figur 3 nicht näher dargestellten Zulauf für die Reinigungsflüssigkeit verbunden sind. Wie angedeutet, benetzen die Zuführungen 27 die Abscheidewände 25 mit der Reinigungsflüssigkeit, so dass diese an den Wänden hinabläuft und sich im unteren Bereich der Reinigungsvorrichtung am Ablauf 20 sammelt. Dabei entsteht auf den Abscheidewänden 25 ein Film 28 der Reinigungsflüssigkeit wobei das Prozessgas an diesen Film entlangstreicht.

Die Reinigungsvorrichtung 11 gemäß Figur 4 weist im Reinigungsraum 15 eine Vielzahl von Einspritzöffnungen 29 auf, die mit dem Zulauf 19 verbunden sind. Die Gesamtheit der Einspritzöffnungen erzeugt in dem Reinigungsraum 15 einen regen- oder nebelartigen Vorhang 30, durch den das Prozessgas geleitet wird. Die Reinigungsflüssigkeit sammelt sich im unteren Teil des Reinigungsraumes im Bereich des Ablaufes 20.

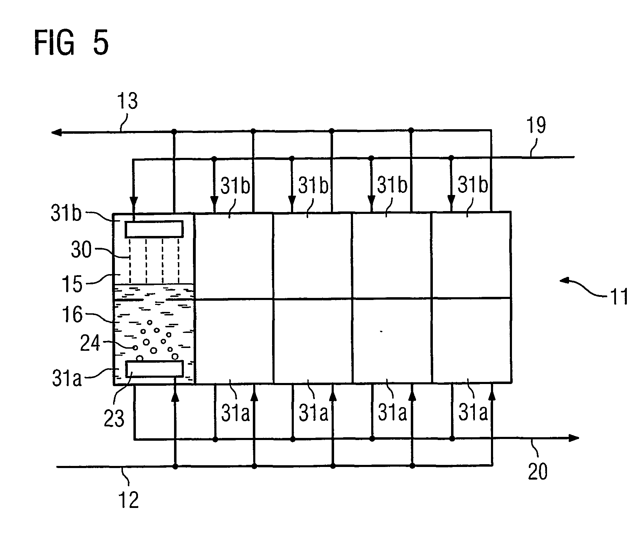

In Figur 5 ist ein modularer Aufbau der Reinigungsvorrichtung 11 der vorliegenden Erfindung dargestellt. Dabei sind Module 31a, 31b vereinfacht als Kästen dargestellt, wobei zwei dieser Kästen aufgeschnitten sind. An den geschnitten dargestellten Modulen ist zu erkennen, dass es sich jeweils um die Reihenschaltung zweier Module mit unterschiedlichen Funktionsprinzipien handelt. Die Module 31a dienen der Vorreinigung und folgen dem in Figur 2 dargestellten Funktionsprinzip. Die Module 31b dienen der Endreinigung, wobei das Funktionsprinzip gemäß Figur 4 verwendet wird. Selbstverständlich sind auch beliebige andere Kombinationen von Funktionsprinzipien denkbar.

Die Reinigungsflüssigkeit wird zunächst den Modulen 31b und dann den Modulen 31a zugeleitet. Daher steht für die Endreinigung zunächst eine gering durch Verunreinigungen beaufschlagte Reinigungsflüssigkeit zur Verfügung, wodurch die Effizienz der Endreinigung verbessert wird. Die Reinigungsflüssigkeit wird anschließend noch für die Vorreinigung verwendet, wo ein Reinigungseffekt aufgrund der noch hohen Konzentration an Verunreinigungen im Prozessgas möglich ist. Bezüglich der Flussrichtungen von Reinigungsflüssigkeit und Prozessgas ist also gemäß Figur 5 das Gegenstromprinzip verwirklicht. Genauso denkbar ist jedoch ein Gleichstromprinzip sofern dies für den konkreten Anwendungsfall geeigneter erscheint. Außerdem können in den Modulen 31b und 31a auch unterschiedliche Reinigungsflüssigkeiten verwendet werden, um das Prozessgas nacheinander unterschiedlichen Reinigungsschritten zu unterziehen (nicht dargestellt).

Während die Reihenschaltung der Module 31a und 31b die Reinigungswirkung der Reinigungsvorrichtung 11 verbessert, zielt die parallele Anordnung der jeweiligen Modulkombination 31a, 31b auf eine Steigerung der möglichen Durchsatzmenge an Prozessgas. Hierdurch kann die modulare Reinigungsvorrichtung 11 an Reflowlötanlagen mit unterschiedlicher Kapazität angepasst werden.

## Patentansprüche

1. Reinigungsvorrichtung für Prozessgase, insbesondere einer Reflowlötanlage, mit einer Vielzahl von eine Reinigungsflüssigkeit für das Prozessgas enthaltenden Reinigungsräumen (15), die alle über eine Zuleitung (12) für das verunreinigte Prozessgas und eine Ableitung (13) für das gereinigte Prozessgas durchströmbar sind,
wobei die Vielzahl von Reinigungsräumen jeweils durch Module gebildet ist, die parallel angeordnet sind, um eine Steigerung der Durchsatzmenge an Prozessgas zu erreichen und die nach einander durchströmbar angeordnet sind, um den geforderten Reinheitsgrad für das Prozessgas zu erreichen;
**dadurch gekennzeichnet, dass**
zumindest ein Teil der Reinigungsräume (15) eine Vielzahl von jeweils voneinander getrennten Abscheidewänden (25) enthält, an deren jeweiligen oberen Rändern jeweils Zuführungen für die Reinigungsflüssigkeit vorgesehen sind, so dass auf der jeweiligen Oberfläche ein Film (28) der Reinigungsflüssigkeit befindet, wobei wenigstens eine der Abscheidewände durch eine Außenwand der Reinigungsvorrichtung gebildet wird.

2. Reinigungsvorrichtung nach Anspruch 1, **dadurch gekennzeichnet, dass** die Module mit verschiedenen Wirkprinzipien der Abscheidung hintereinander in Reihe geschaltet sind.

3. Reinigungsvorrichtung nach Anspruch 1 oder 2, **dadurch gekennzeichnet, dass** ein Durchströmungsweg für die Reinigungsflüssigkeit derart durch die in Reihe geschalteten Module verläuft, dass die Strömungsrichtung der Reinigungsflüssigkeit der Strömungsrichtung des Prozessgases entgegengerichtet ist.

4. Reinigungsvorrichtung nach einem der vorangehenden Ansprüche, **dadurch gekennzeichnet, dass** in den Reinigungsräumen (15) der nacheinander durchströmbar angeordneten Module (31) Reinigungsflüssigkeiten mit unterschiedlichen Reinigungseigenschaften vorgesehen sind.

5. Reinigungsvorrichtung nach einem der vorangehenden Ansprüche, **dadurch gekennzeichnet, dass** der zumindest eine Reinigungsraum (15) jeweils ein aus der Reinigungsflüssigkeit (16) bestehendes Bad enthält, wobei die Zuleitung (12) jeweils unterhalb des Flüssigkeitsspiegels des Bades in dieses mündet.

6. Reinigungsvorrichtung nach einem der vorangehenden Ansprüche, **dadurch gekennzeichnet, dass** die Abscheidewand (25) lotrecht oder mit Gefälle in den Reinigungsräumen (15) angeordnet ist.

7. Reinigungsvorrichtung nach einem der vorangehenden Ansprüche, **dadurch gekennzeichnet, dass** in dem mindestens einen Reinigungsraum (15) mindestens eine Einspritzöffnung (29) für die Reinigungsflüssigkeit (16) gerichtet ist.

8. Reinigungsvorrichtung nach einem der vorangehenden Ansprüche, **dadurch gekennzeichnet, dass** wenigstens ein Reinigungsraum (15) einen Ablauf (20) aufweist, der mit einer Klärvorrichtung (18) für die Reinigungsflüssigkeit verbunden ist.

## Claims

1. A cleaning device for process gases of a reflow soldering system, comprising a plurality of cleaning chambers (15) containing a cleaning liquid for said process gases, which are adapted to be flown through via a supply line (12) for the contaminated process gases and via a discharge line (13) for the cleaned process gases,
wherein said plurality of cleaning chambers (15) are each formed by modules, which arranged in parallel to achieve the required throughput of process gas, and which are arranged to be flown through in successive order to achieve the required degree of purity for the process gas;
**characterized in that**
at least a part of said cleaning chambers (15) contains a plurality of deposition walls (25) separated from each other, wherein each being provided at its upper edge with a cleaning liquid supply means so that on the respective surface a film (28) of the cleaning liquid is positioned, wherein one of the deposition walls being at least an outer wall of the cleaning device.

2. The cleaning device according to claim 1, **characterized in that** the modules having different operative principles of deposition are connected one after the other in series.

3. The device according to claim 1 or 2, **characterized in that** a flow path for the cleaning liquid extends through the series-connected modules in such a manner that the direction of flow of the cleaning liquid is opposite to the direction of flow of the process gas.

4. The cleaning device according to any one of the preceding claims, **characterized in that** cleaning liquids with different cleaning properties are provided in the cleaning chambers (15) of the modules which are arranged to be flown through in successive order.

5. The cleaning device according to any one of the preceding claims, **characterized in that** at least one cleaning chamber (15) contains a corresponding bath consisting of the cleaning liquid (16), the supply line (12) terminating each time below the liquid level of the bath in said bath.

6. The cleaning device according to any one of the preceding claims, **characterized in that** the deposition wall (25) is arranged perpendicular or with a slope in the cleaning chambers (15).

7. The cleaning device according to any one of the preceding claims, **characterized in that** at least one respective injection opening (29) for the cleaning liquid (16) is directed into the at least one cleaning chamber (15).

8. The cleaning device according to any one of the preceding claims, **characterized in that** at least one cleaning chamber (15) comprises a respective outlet (20) which is connected to a clarifying device (18) for the cleaning liquid.

## Revendications

1. Dispositif de purification pour des gaz de traitement, en particulier d'une installation de brasage par fusion, avec plusieurs espaces de purification (15) qui contiennent un liquide de purification pour le gaz de traitement et qui peuvent tous être traversés par un écoulement de gaz de purification grâce à une conduite d'amenée (12) pour le gaz de traitement pollué et à une conduite d'évacuation (13) pour le gaz de traitement purifié,
étant précisé que les espaces de purification sont formés par des modules qui sont disposés parallèlement afin d'obtenir une augmentation du débit de gaz de traitement, et sont aptes à être traversés successivement par ledit écoulement afin d'atteindre le degré de pureté requis pour le gaz de traitement ;
**caractérisé en ce qu'**une partie au moins des espaces de purification (15) contiennent plusieurs parois de séparation (25) distinctes sur les bords supérieurs desquelles sont prévues des conduites d'amenée pour le liquide de purification, de sorte qu'une pellicule (28) de liquide de purification se trouve sur chaque surface, étant précisé que l'une au moins des parois de séparation est formée par une paroi extérieure du dispositif de purification.

2. Dispositif de purification selon la revendication 1, **caractérisé en ce que** les modules sont montés en ligne les uns derrière les autres avec des principes actifs de séparation différents.

3. Dispositif de purification selon la revendication 1 ou 2, **caractérisé en ce qu'**une trajectoire d'écoulement pour le liquide de purification traverse les modules montés en ligne, de telle sorte que le sens d'écoulement du liquide de purification soit opposé au sens d'écoulement du gaz de traitement.

4. Dispositif de purification selon l'une des revendications précédentes, **caractérisé en ce qu'**il est prévu, dans les espaces de purification (15) des modules (31) disposés de manière à pouvoir être traversés successivement, des liquides de purification avec des propriétés de purification différentes.

5. Dispositif de purification selon l'une des revendications précédentes, **caractérisé en ce que** le ou les espaces de purification (15) contiennent chacun un bain composé du liquide d purification (16), la conduite d'amenée (12) débouchant à chaque fois dans le bain au-dessous du niveau de liquide de celui-ci.

6. Dispositif de purification selon l'une des revendications précédentes, **caractérisé en ce que** la paroi de séparation (25) est disposée dans les espaces de purification (15) à la verticale ou avec une inclinaison.

7. Dispositif de purification selon l'une des revendications précédentes, **caractérisé en ce que** dans le ou les espaces de purification (15), au moins une ouverture d'injection (29) est orientée pour le liquide de purification (16).

8. Dispositif de purification selon l'une des revendications précédentes, **caractérisé en ce qu'**au moins un espace de purification (15) comporte un orifice d'écoulement (20) qui est relié à un dispositif de clarification (18) pour le liquide de purification.
